# Europäisches Patentamt

## European Patent Office

## Office européen des brevets

(11) Publication number: **0 217 764**
**B1**

(12) **EUROPEAN PATENT SPECIFICATION**

(45) Date of publication of patent specification: **25.04.90**

(51) Int. Cl.⁵: **B 60 J 5/04**

(21) Application number: **86830278.7**

(22) Date of filing: **01.10.86**

(54) **Motor-vehicle door.**

(30) Priority: **02.10.85 IT 5388085 u**

(43) Date of publication of application:
**08.04.87 Bulletin 87/15**

(45) Publication of the grant of the patent:
**25.04.90 Bulletin 90/17**

(84) Designated Contracting States:
**DE ES FR GB SE**

(56) References cited:
**FR-A-2 231 533**
**US-A-1 880 590**
**US-A-1 913 400**
**US-A-2 232 345**

(73) Proprietor: **FIAT AUTO S.p.A.**
**Corso Giovanni Agnelli 200**
**I-10135 Torino (IT)**

(72) Inventor: **Franzero, Pier Renato**
**Via L. Spazzapan 12**
**I-10135 Torino (IT)**
Inventor: **Luisolo, Antonio**
**Via Buenos Aires 106**
**I-10137 Torino (IT)**

(74) Representative: **Buzzi, Franco et al**
**c/o Jacobacci-Casetta & Perani S.p.A. Via Alfieri, 17**
**I-10121 Torino (IT)**

Courier Press, Leamington Spa, England.

## Description

The present invention relates to motor vehicle doors of the type comprising an inner framework and an outer sheet connected together and having respective corresponding apertures defining a window opening, one of said outer sheet and inner framework being provided with integrally-formed bent tabs protruding from at least the upper and side edges of the window opening and acting as elements for connecting the outer sheet and the inner framework and a channel for housing a weather-strip interposed between the framework and the outer sheet at least in correspondence with the upper edge and side edges of the window opening.

A motor vehicle door of the above-mentioned type is known from US—A—1 880 590.

In current forms of motor vehicle doors of the type specified above, the said channel is constituted by a suitably-formed, continuous U-section profile which is inserted between the framework and the outer sheet of the door after these two parts have been connected. The assembly effected in the manner indicated above may not be easy and in any case requires a certain amount of time.

The object of the present invention is to provide a motor vehicle door in which the need to insert the channel after the inner framework and outer sheet have been connected is eliminated.

This object is achieved according to the invention by means of a door of the type defined at the beginning, characterised in that the channel is made of a plurality of said bent tabs disposed at intervals along each of the said edges and being generally U-shaped with their cavities facing towards the opening.

According to the present invention, there is thus achieved the advantage that a complete door, aleady including the channel for housing the weather-strip for the window, is formed when the inner framework is connected to the outer sheet.

Further characteristics and advantages of the present invention will become apparent from the description which follows with reference to the appended drawings, provided purely by way of non-limiting example, in which:

Figure 1 is a front elevational view of a motor vehicle door according to the invention,

Figure 2 is a section taken on the line II—II of Figure 1, and

Figure 3 is a perspective view of a detail of Figure 1.

With reference to the drawings, a motor vehicle door is generally indicated 1 and comprises an inner metal framework 2 and an outer sheet 3 connected together in a conventional manner. The outer sheet and the inner framework have respective corresponding apertures which define a window opening 4. The upper edge of this window opening 4 is indicated 4a, while its side edges are indicated 4b and 4c.

A channel-shaped seat for housing a weather-strip for a vertically-sliding window pane associated with the window opening 4 is provided along the edges 4a, 4b and 4c. According to the invention, this channel-shaped seat is formed integrally with one of the two components of the door, unlike conventional doors in which the seat for the weather-strip is constituted by a U-profiled section inserted between the framework 2 and the sheet 3.

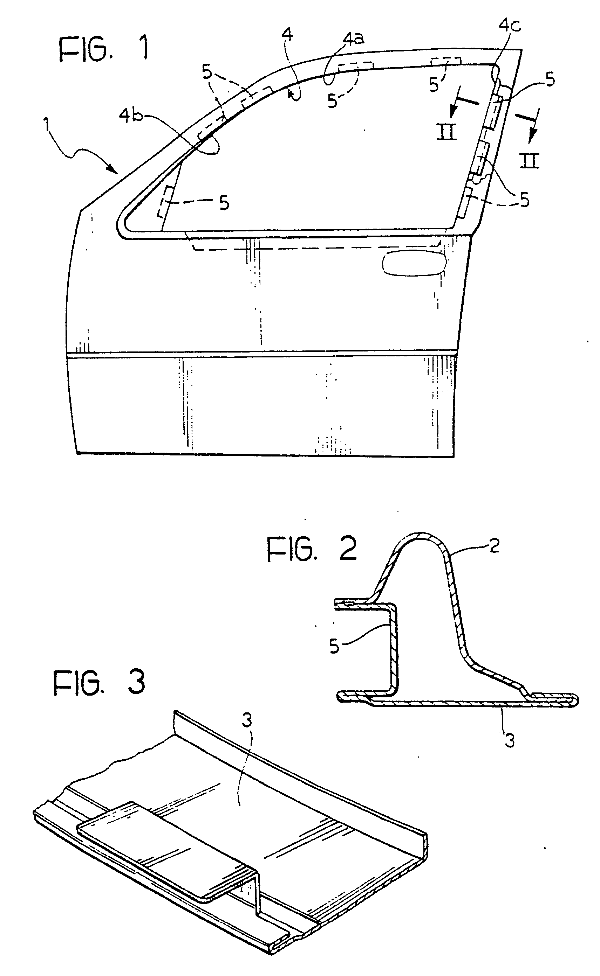

As is best seen in Figures 2 and 3, in the embodiment illustrated, the outer sheet 3 has a plurality of bent tabs disposed at intervals along the edges 4a, 4b and 4c and being generally U-shaped with their cavities facing towards the opening 4. The tabs 5 are formed directly during the pressing of the outer sheet 3 and are arranged to receive the weather-strip for the window.

The free ends of the tabs 5 are normally fixed to the inner framework 2 by welding or equivalent systems, so that, to advantage, they also act as the elements for connecting the framework 2 to the outer sheet 3.

It should be noted that the tabs 5 could also be formed along the lower side of the opening 4 in the case of a window with a fixed pane. Moreover, although the embodiment illustrated relates to a front door, it is clear that the invention can also be applied to any glazed aperture of a motor vehicle.

Finally, it must be pointed out that the tabs 5 defining the channel for the weather-strip could be formed from the inner framework 2 instead of from the outer sheet 3.

## Claims

1. Motor vehicle door (1) comprising an inner framework (2) and an outer sheet (3) connected together and having respective corresponding apertures defining a window opening (4), one of said outer sheet (3) and inner framework (2) being provided with integrally-formed bent tabs (5) protruding from at least the upper (4a) and side edges (4b, 4c), of the window opening (4) and acting as elements for connecting the outer sheet (3) and the inner framework (2), and a channel for housing a weather-strip interposed between the framework (2) and the outer sheet (3) at least in correspondence with the upper edge (4a) and side edges (4b, 4c) of the window opening (4), characterised in that the channel is made of a plurality of said bent tabs (5) disposed at intervals along each of the said edges (4a, 4b, 4c) and being generally U-shaped with their cavities facing towards the opening (4).

2. Door according to Claim 1, characterised in that the tabs (5) are formed directly from the outer sheet (3) during pressing thereof.

## Patentansprüche

1. Kraftfahrzeugtür (1) mit einer inneren Rahmenkonstruktion (2) und einem äußeren Blatt (3), die miteinander verbunden sind und die korrespondierende Aussparungen haben, die eine Fensteröffnung (4) bestimmen, wobei entweder an dem äußeren Blatt (3) oder an der inneren Rahmenkonstruktion (2) abgewinkelte Lappen (5) einstükig angeformt sind, die zumindest von der Oberkante (4a) und den Seitenkanten (4b, 4c) der Fensteröffnung (4) hervorstehen und als Elemente zur Verbindung des äußeren Blatts (3) und der inneren Rahmenkonstruktion (2) dienen,

sowie mit einem Kanal zur Aufnahme einer Wetterleiste, der zumindest im Bereich der Oberkante (4a) und der Seitenkanten (4b, 4c) der Fenstgeröffnung (4) zwischen der Rahmenkonstruktion (2) und dem äußeren Blatt (3) angeordnet ist, dadurch gekennzeichnet, daß der Kanal aus mehreren der abgewinkelten Lappen (5) gebildet ist, die in Abständen längs jeder der genannten Kanten (4a, 4b, 4c) angeordnet und im .wesentlichen U-förmig mit zu der Fensteröffnung (4) weisenden Hohlseiten ausgebildet sind.

2. Kraftfahrzeugtür nach Anspruch 1, dadurch gekennzeichnet, daß die Lappen (5) direkt aus dem äußeren Blatt (3) bei dessen Pressen ausgeformt sind.

**Revendications**

1. Porte de véhicule automobile (1) comprenant une carcasse intérieure (2) et une feuille extérieure (3) assemblées l'une à l'autre et présentant des ouvertures respectives correspondantes qui définissent une baie de fenêtre (4), l'un des composants constitués par la feuille extérieure (3) et la carcasse intérieure (2) étant muni de pattes pliées (5) formées d'une seule pièce avec ce composant, qui font saillie au moins sur le bord supérieur (4a) at les bords latéraux (4b, 4c) de la baie (4) de la fenêtre, et qui jouent le rôle d'éléments servant à assembler la feuille extérieure (3) et la carcasse intérieure (2), et une gouttière destinée à recevoir un joint d'étanchéité interposé entre la carcasse (2) et la feuille extérieure (3), au moins le long du bord supérieur (4a) et des bords latéraux (4b, 4c) de la baie (4) de la fenêtre, caractérisée en ce que la gouttière est composée d'une pluralité desdites pattes pliées (5) disposées à intervalles le long de chacun desdits bords (4a, 4b, 4c) et qui sont sensiblement en forme de U, avec leur cavité dirigée vers la baie (4).

2. Porte selon la revendication 1, caractérisée en ce que les pattes (5) sont formées directement à partir de la feuille extérieure (3) pendant l'emboutissage de cette dernière.

FIG. 1

FIG. 2

FIG. 3